# EUROPÄISCHE PATENTSCHRIFT

(11) **EP 1 736 745 B1**
(45) Veröffentlichungstag und Bekanntmachung des Hinweises auf die Patenterteilung: **01.08.2012**
(21) Anmeldenummer: 05105422.9
(22) Anmeldetag: 21.06.2005
(51) Int. Cl.: G01G 3/14, G01G 23/01

(54) **Verfahren zur adaptiven Korrektur von Drifterscheinungen bei einer Kraftmessvorrichtung sowie eine Kraftmessvorrichtung zur Durchführung des Verfahrens.**
Method for adaptively correcting drift conditions in a force measuring device and force measuring device for carrying out the method.
Procédé de correction adaptatif de la derive associés à un dispositif de mesure de force et dispositif de mesure de force servant à la mise en ouvre de ce procédé.

(43) Veröffentlichungstag der Anmeldung: 27.12.2006
(73) Patentinhaber: Mettler-Toledo AG, 8606 Greifensee (CH)
(72) Erfinder: Tellenbach, Jean-Maurice, 8442, Hettlingen (CH); Reber, Daniel, 8322, Madetswil (CH)

(56) Entgegenhaltungen:
- EP-A- 0 670 479
- EP-A- 0 945 717
- WO-A-03/078937
- DE-B3- 10 353 414
- DE-C1- 19 709 624
- US-A- 4 656 599
- US-A- 4 691 290
- US-A- 4 836 308

## Beschreibung

Die Erfindung betrifft ein Verfahren zur Korrektur von Drifterscheinungen bei einer elektronischen Kraftmessvorrichtung, insbesondere einer Waage, und eine zur Durchführung dieses Verfahrens geeignete Kraftmessvorrichtung, insbesondere eine Waage, nach dem Oberbegriff des Patentanspruchs 1 bzw. 12.

Bei elektronischen Kraftmessvorrichtungen, insbesondere Waagen, werden an verschiedene Konstruktionselemente hohe Anforderungen bezüglich ihrer mechanischen Eigenschaften gestellt. Von besonderer Bedeutung für die Präzision der Waage sind beispielsweise Lastzellen mit ihren Lenkvorrichtungen, Koppel- und Lagerelementen, oder Kraft/Weg-Wandler mit zugehörigen Sensoreinrichtungen, beispielsweise zu einer Messbrücke geschalteten Dehnmessstreifen. Bei einem Kraft/Weg-Wandler ist der lineare Zusammenhang zwischen Kraft und Verformungsweg von Bedeutung, wobei reproduzierbare elastische Eigenschaften angestrebt werden. Wie in [1], EP 0 945 717 A1, beschrieben ist, sind eine möglichst geringe Anelastizität, möglichst wenig Kriechen und eine möglichst kleine (mechanische) Hysterese gefordert. Ausserdem sollen die Elemente korrosionsfest und vorzugsweise nicht magnetisch sein.

Störende Drifterscheinungen, insbesondere das sogenannte Kriechen, d.h. die Änderung des Messresultats innerhalb eines Messintervalls, sind jedoch trotz deutlicher Verbesserungen der Eigenschaften der für die Präzision der Waagen relevanten Elemente nach wie vor ein Thema.

Weitere Eigenschaften der Waage, nebst Kriechen und Hysterese, nämlich Linearität, Eckenlast, Wiederholbarkeit, Temperaturstabilität, Einschwingzeit und Auflösung, die die Genauigkeit einer Messung bestimmen, sind beispielsweise in [2], Bauen Sie Ihre Qualität auf solidem Grund!, Firmenbrochure, Mettler-Toledo GmbH, Januar 2001, beschrieben.

Faktoren der Waage, die die Genauigkeit einer Messung bestimmen, sind in [3], Wägefibel, Mettler-Toledo GmbH, April 2001, beschrieben. Dort ist erläutert, dass die Genauigkeit der Waage von physikalischen Einflüssen; wie Wärmeeinwirkungen, Feuchtigkeitsaufnahme oder Feuchtigkeitsabgabe, elektrostatischen oder magnetischen Wechselwirkungen; anhängig ist. Von Bedeutung ist daher der Standort der Waage, der derart gewählt wird, dass störende physikalische Einflüsse vermieden werden. Ferner ist die Bedienung der Waage; beispielsweise das Nivellieren und die korrekte Inbetriebnahme, die Anordnung der Windschutzelemente, die Wahl eines geeigneten Wägegefässes, und die Positionierung der Last auf der Waagschale, von zentraler Bedeutung für die Messgenauigkeit. Durch die beschriebenen Einflüsse und Einwirkungen wird daher der Zustand der Waage bestimmt, von dem die Messgenauigkeit abhängig ist.

Einzelne dieser äusseren Einflüsse, die die Messgenauigkeit beeinflussen, oder Messabweichungen, die durch die Eigenschaften und das Verhalten der Waage bestimmt sind, lassen sich regelungstechnisch kompensieren. Bei verschiedenen ungünstigen Zuständen der Waage, die beispielsweise durch Vibrationen oder Windeinwirkungen bei fehlendem Windschutz verursacht sind, ist eine Korrektur der Einwirkungen bzw. eine Korrektur des resultierenden Messfehlers hingegen nicht möglich.

Die US 4 656 599 ist mit der Erfassung der auf den Messwertaufnehmer einer Waage einwirkenden Störeinflüsse befasst. Diese umfassen neben der Temperatur, der Feuchtigkeit auch das Kriechen. Im Rahmen der Signalverarbeitungseinheit ist ein Speicherbereich vorhanden, dem fortlaufend digitale Daten aus den Ausgangssignalen jeweiliger Fühler und ggf. dem Ausgangssignal des Messwertaufnehmers zugeführt werden und dort für eine vorgegebene Zeit gespeichert werden. Die aus verschiedenen Zeiten stammenden Daten werden mit vorgegebenen Gewichtungsfaktoren bewertet und zur Bestimmung der Korrekturen, die am Ausgangssignal des Messwertaufnehmers anzubringen sind, benutzt

Aus [4], U.S. 4'691'290, ist eine Waage bekannt, bei der durch Kriechen verursachte Drifterscheinungen durch Kompensation der Driftanteile korrigiert werden. Bei dem in dieser Waageangewendeten Verfahren werden eine Darstellung der gemessenen Last und der Status des "Kriechens" ermittelt und miteinander kombiniert, um einen zur angewendeten Last korrespondierenden Messwert zu erhalten, bei dem durch Kriechen verursachte Fehleranteile kompensiert sind.

In [4] ist ferner beschrieben, dass die mathematische Darstellung des Status des "Kriechens" in Funktion der Zeit, der gemessenen Last, und des unmittelbar zuvor ermittelten Status des "Kriechens" ermittelt wird, um vorhergehende Einwirkungen auf die Waage zu berücksichtigen.

Der Status des "Kriechens" wird bei dieser Waage anhand von Konstanten berechnet, die bei der Ersteinstellung der Waage bestimmt und abgespeichert wurden. Die individuelle Ermittlung dieser Konstanten für jede Waage ist gemäss [4] notwendig, da meist Abweichungen zwischen verschiedenen Waagen vorhanden sind.

In [6], U.S. 4'836'308 werden mittels regelmässig wiederholten Kalibrierprozessen verschiedene Einwirkungen auf die Kraftmessvorrichtung (Umgebungstemperatur, Versorgungsspannung und Nullsignal) erfasst und aus diesen Messwerten Varianzfaktoren berechnet. Die Varianzfaktoren werden gespeichert und zu einem späteren Zeitpunkt zur Kompensation von Drift-Erscheinungen herangezogen.

Es wurde nun festgestellt, dass trotz der oben beschriebenen Massnahmen zur Verbesserung des Driftverhaltens von Waagen, weiterhin störende Drifterscheinungen auftreten können.

Der vorliegenden Erfindung liegt daher die Aufgabe zugrunde, ein verbessertes Verfahren zur Korrektur von Drifterscheinungen bei einer elektronischen Kraftmessvorrichtung, insbesondere einer Waage, und eine gemäss diesem verbesserten Verfahren arbeitende Kraftmessvorrichtung, insbesondere Waage, zu schaffen.

Diese Aufgabe wird mit einem Verfahren und einer Kraftmessvorrichtung gelöst, welche die in Anspruch 1 und Anspruch 11 angegebenen Merkmale aufweisen. Vorteilhafte Ausgestaltungen der Erfindung sind in weiteren Ansprüchen angegeben.

Das erfindungsgemässe Verfahren dient der Korrektur von Drifterscheinungen, die auf dem Kriechen beruhen, bei einer elektronischen

Kraftmessvorrichtung, insbesondere einer Waage, die einen Messumformer aufweist, durch den ein einer einwirkenden Last entsprechendes Messsignal gebildet wird, das über einen Analog-Digitalwandler einer von wenigstens einem Prozessor gestützten, der Verarbeitung digitaler Signale dienender digitalen Signalverarbeitungseinheit zugeführt wird, mittels der Driftabweichungen kompensierbar sind und die dazu mittels des Prozessors auf in einer Speichereinheit abgelegte Drift-Parameter zugreift, anhand derer ein zeitabhängiger Korrekturwert kalkuliert und damit der Driftfehler des Messsignals korrigiert wird.

Mittels des Prozessors und der Signalverarbeitungseinheit werden anhand eines in der Speichereinheit abgelegten Optimierungsprogramms innerhalb von regelmässigen oder unregelmässigen zeitlichen Abständen, automatisch oder durch den Anwender initialisiert, selbsttätig neue, optimierte Werte für die Drift-Parameter des durch Kriechen verursachten Driftfehlers des Messsignals ermittelt und in der Speichereinheit abgelegt.

Es werden unkorrigierte oder nur teilweise korrigierte Signalverläufe des Messsignals bei der Durchführung von Messungen bei Testvorgängen und/oder bei Kalibrierungsvorgängen verknüpft mit einer Zeit- und Datumsinformation gespeichert und diese neuen, optimierten Werte werden für die Drift-Parameter (P1, P2, ...) unter Verwendung der gespeicherten Signalverläufe (s1, ..., s-n) des Messsignals (ms) ermittelt.

Bei der Untersuchung von Drifterscheinungen von elektronischen Waagen wurde festgestellt, dass diese Erscheinungen nicht nur von wechselnden Umgebungseinflüssen und dem einmal festgestellten Driftverhalten der eingangs beschriebenen Konstruktionselemente der Waage abhängig sind. Zusätzlich wurde festgestellt, dass die bei Waagen auftretenden Drifterscheinungen wesentlich von Änderungen des Driftverhaltens der eingangs beschriebenen Konstruktionselemente abhängen, die im Verlauf des Betriebs der Waage über längere Zeitdauer auftreten. Anstatt die Drifterscheinungen zu belassen oder durch Einsenden der Waage im Werk beseitigen zu lassen, erfolgt bei erfindungsgemässen Waagen eine adaptive Korrektur von Drifterscheinungen, die sich nach der Ersteinstellung und Auslieferung der Waage anwenderseitig langsam ausprägen.

Neue Werte für die Drift-Parameter werden vorzugsweise unter Verwendung der aktuell gespeicherten Werte der Drift-Parameter sowie aktuell und/oder früher gespeicherter Messdaten, Testdaten und/oder Kalibrierungsdaten ermittelt.

In einer ersten Ausgestaltung der Erfindung wird ein unkorrigierter oder nur teilweise korrigierter Amplitudenverlauf oder entsprechende Amplituden/Zeit-Wertepaare des Messsignals bzw. ein Signalverlauf des Messsignals aktuell aufgenommen. Sofern ein geeigneter Zustand der Waage vorliegt, kann der Anwender das erfindungsgemässe Verfahren initialisieren und durch das Optimierungsprogramm anhand des aktuell aufgenommenen Signalverlaufs optimierten Werte der Drift-Parameter anschliessend als Ersatz bisheriger Werte akzeptieren. Der Anwender kann beispielsweise ein Justiergewicht auflegen oder automatisch auflegen lassen und einen Signalverlauf aufnehmen, anhand dessen das Verfahren durchgeführt werden soll. Möglich ist ferner, dass das Optimierungsprogramm nach der Messung einer Last meldet, dass ein Drift festgestellt wurde und ein geeigneter Zustand vorliegt. Der Anwender kann nun seinerseits bestätigen, dass der Zustand der Waage für die Optimierung geeignet ist und dass das Optimierungsverfahren durchgeführt werden soll. Die Aufgabenverteilung zwischen dem Optimierungsprogramm und dem Anwender kann daher beliebig festgelegt sein oder flexibel gewählt werden. Sofern eine Vielzahl von Drift-Parametern präzise optimiert werden sollen, kann dies zu einem Aufwand für den Anwender führen, der sich durch die nachstehend beschriebenen Massnahmen vermeiden lässt.

In weiteren vorzugsweisen Ausgestaltungen werden unkorrigierte oder nur teilweise korrigierte Amplitudenverläufe oder Amplituden/Zeit-Wertepaare des Messsignals des Messsignals bei der Durchführung von Messungen bei Testvorgängen und/oder bei Kalibrierungsvorgängen gespeichert. Vorzugsweise werden die Daten der Signalverläufe verknüpft mit der aktuellen Zeitinformation (Datum und/oder Uhrzeit) gespeichert. Der zu speichernde analoge oder bereits digitalisierte Signalverlauf soll hinsichtlich der zu korrigierenden Drifterscheinung, für die die Drift-Parameter zu einem späteren Zeitpunkt zu optimieren sind, noch nicht bearbeitet sein. Möglich und sinnvoll ist jedoch die anderweitige Bearbeitung, beispielsweise die Filterung des Signalverlaufs. Sofern die Drift-Parameter von auf dem Kriechen beruhender Drifterscheinungen zu kompensieren sind, werden beispielsweise Hysterese-Effekte, Linearitätsabweichungen, durch Interventionen des Anwenders verursachte Einwirkungen oder Temperatureinflüsse vorzugsweise kompensiert. Dadurch tritt die durch Kriechen verursachte Driftabweichung deutlicher hervor, weshalb die Wirkung der Drift-Parameter, insbesondere der schrittweisen Änderung der Werte der Drift-Parameter präziser erkennbar und das Optimierungsverfahren besser und schneller durchführbar ist.

Aufgrund der sich nur langsam ändernden Drifteigenschaften der Waage ist es sinnvoll, dass das erfindungsgemässe Verfahren nur in entsprechend grossen Zeitabständen durchgeführt wird. Beispielsweise kann das erfindungsgemässe Verfahren periodisch nach jeweils n Monaten (beispielsweise n = 2) durchgeführt werden. Das Verfahren kann auch bedarfsweise durch den Anwender initialisiert werden. In einer vorzugsweisen Ausgestaltung wird anhand gespeicherter Daten das aktuelle Mass auftretender Drifterscheinungen festgestellt und mit einem entsprechenden Schwellwert verglichen, wonach nach Überschreiten des Schwellwerts das erfindungsgemässe Verfahren durchgeführt wird.

Zur Optimierung der Werte der Drift-Parameter werden zumindest einzelne der früher registrierten Signalverläufe aus der Speichereinheit entnommen und der digitalen Signalverarbeitungseinheit sequentiell zugeführt, in der die Korrektur von Drifterscheinungen anhand neuer Werte für die Drift-Parameter erfolgt, wonach die korrigierten Signalverläufe evaluiert und optimierte Werte für die Drift-Parameter gespeichert werden. Diese Variante des erfindungsgemässen Verfahrens ist besonders vorteilhaft, da optimierte Werte für die Drift-Parameter schnell, präzise und ohne Beteiligung des Anwenders ermittelt werden können. Notwendig sind lediglich genügend Rechenleistung und Speicherplatz, beispielsweise in einem elektronischen oder magnetischen Speichermedium. Das Verfahren kann ferner während Perioden durchgeführt werden, in denen keine weiteren Anwendungen durchgeführt werden. Ferner kann das Verfahren abgebrochen oder unterbrochen werden, falls der Anwender die Waage für Messungen verwenden will.

Beispielsweise werden die Signalverläufe ausgehend von aktuellen Werten für die Drift-Parameter durch schrittweises Ändern dieser Werte überprüft, wonach für jeden Prüfschritt, gegebenenfalls nach Mittelwertbildung der Messresultate, ein Prüfwert berechnet wird, welcher der Güte der Korrektur entspricht. D.h. die Werte der Drift-Parameter werden innerhalb eines als sinnvoll erachteten Bereichs in kleinen Schritten geändert, wonach die unkorrigierten Signalverläufe für jeden Prüfschritt mit den entsprechenden Drift-Parametern bearbeitet und in korrigierte Signalverläufe gewandelt und ausgewertet werden. Die für jeden Prüfschritt ermittelten Prüfwerte werden anschliessend miteinander verglichen, wonach die Werte für die Drift-Parameter des besten Prüfwerts als neue, aktuelle Werte für die Drift-Parameter abgespeichert werden.

Mit diesen Massnahmen gelingt eine Optimierung der Drift-Parameter, sofern die registrierten Signalverläufe auf ungestörtem Verhalten der Waage und stabilen Messkonditionen beruhen. Sofern das erfindungsgemässe Verfahren hingegen mit Signalverläufen durchgeführt wird, die durch Störungen beeinflusst sind, wird mit der Durchführung des Verfahrens keine Verbesserung erzielt.

In einer weiteren vorzugsweisen Ausgestaltung werden daher durch Einwirkungen auf die Waage resultierende Zustandsmerkmale der Waage und/oder aus den Signalverläufen ermittelte Signalverlaufsmerkmale ermittelt; wonach anhand der Zustandsmerkmale und/oder der Signalverlaufsmerkmale die Signalverläufe hinsichtlich Verwendbarkeit geprüft und zur Optimierung der Drift-Parameter nicht geeignete Daten nicht weiter berücksichtigt werden.

Vorzugsweise werden Daten nicht weiter berücksichtigt,
a) die eine Zeitinformation aufweisen, für die Abweichungen vom Normalbetrieb der Waage registriert wurden,
b) für die störende Umgebungseinflüsse, wie mechanische Vibration, erhöhte Luftfeuchtigkeit, Störungen der Stromversorgung, störende von der Last bzw. dem Messobjekt abhängige oder von der Last bzw. dem Messobjekt unabhängige Luftbewegungen, oder störende Temperatureinwirkungen, registriert wurden;
c) für die gegebenenfalls durch Feuchtigkeitsabgabe oder Feuchtigkeitsaufnahme verursachte Laständerungen während der Messung gegebenenfalls aufgrund von bei Belastung und Entlastung asymmetrischen Driftverläufen registriert wurden; und/oder
d) für die störende Einwirkungen früherer Messanwendungen registriert wurden.

In einer weiteren vorzugsweisen Ausgestaltung wird über die gesamte Betriebszeit der Waage mindestens ein Verlauf von unkompensierten Driftwerten der Waage registriert und ein dazu korrespondierender Verlauf von Kompensationswerten nachgeführt und zur Korrektur von Drifterscheinungen entsprechend verwendet. Beispielsweise kann durch Extrapolation des Verlaufs von Kompensationswerten ein zusätzlicher Kompensationsanteil ermittelt werden, der nach der Durchführung des letzten Optimierungsverfahrens ergänzend angewendet wird.
Nachfolgend wird die Erfindung anhand von Zeichnungen näher erläutert. Dabei zeigt:
- Figur 1: das Blockschaltbild der beispielhaft dargestellten Waage 1 von Figur 2 mit einer digitalen Signalverarbeitungseinheit 13 und einem Signalprozessor 130, der anhand eines Optimierungsprogramms P_{OPT} zur Durchführung des erfindungsgemässen Verfahrens oder einzelnen Verfahrensschritten geeignet ist;
- Figur 2: die oben genannte Waage 1 mit symbolisch dargestellten Einwirkungen d_{A}, d_{E}, d_{M}, d_{W}, d_{T}, d_{L}, die den Signalverlauf des Messsignals ms_{A}, gegebenenfalls in Kombination miteinander, störend beeinflussen können;
- Figur 3: ein Messumformer 10 mit zu dessen Betrieb vorgesehenen Komponenten, die zur Durchführung des erfindungsgemässen Verfahrens geeignet sind;
- Figur 4: in zeitlichen Abständen von mehreren Monaten aufgenommene, unkorrigierte Driftverläufe;
- Figur 5: in zeitlichen Abständen von mehreren Monaten aufgenommene, mittels einmal festgelegter Drift-Parameter korrigierte Driftverläufe;
- Figur 6: in zeitlichen Abständen von mehreren Monaten aufgenommene, mittels adaptiv angepassten Drift-Parametern korrigierte Driftverläufe;
- Figur 7: die über mehrere Monate extrapolierten zeitlichen Verläufe L_{U}, L_{C} der kompensierten und unkompensierten Driftanteile, die aufgrund von Kriechen, fünfMinuten nach Auflegen einer Last auftreten sowie der tatsächliche Verlauf L_{CR} von erfindungsgemäss angepassten Korrekturwerten und den extrapolierten Verlauf idealer Korrekturwerte; und Minuten nach Auflegen einer Last auftreten sowie der tatsächliche Verlauf L_{CR} von erfindungsgemäss angepassten Korrekturwerten und den extrapolierten Verlauf idealer Korrekturwerte; und
- Figur 8: die Waage 1 von Figur 2, die zur automatischen oder halbautomatischen Durchführung des erfindungsgemässen Verfahrens geeignet ist.

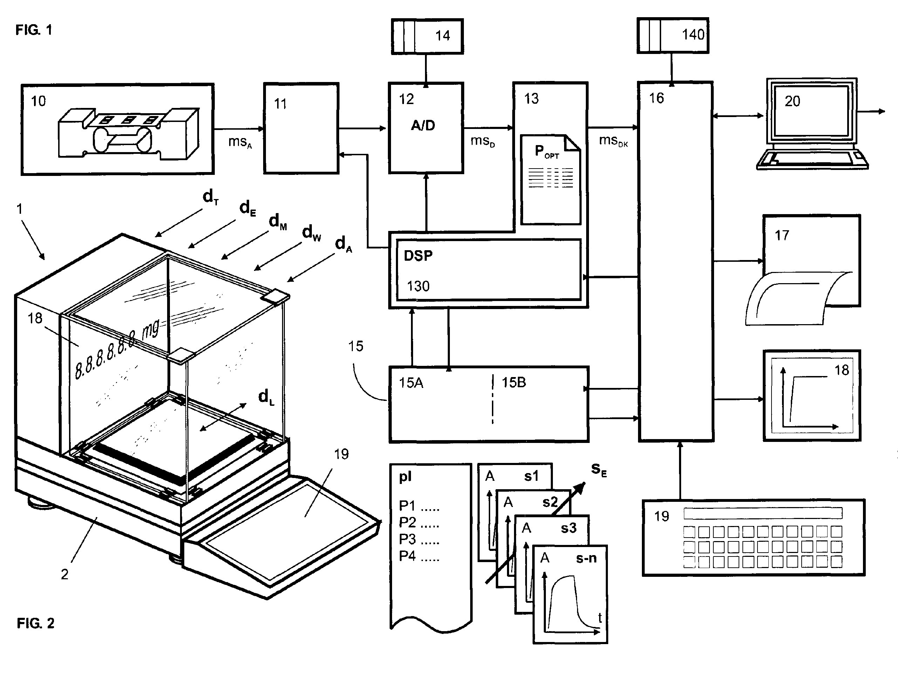

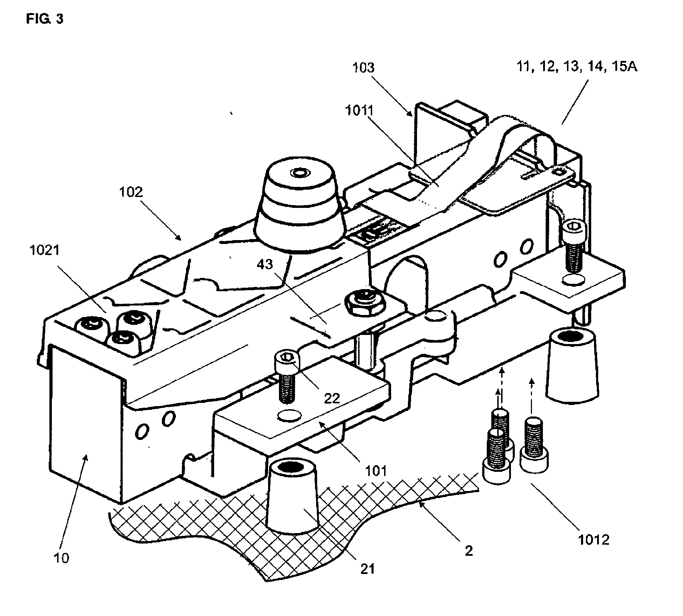

Figur 1 zeigt in beispielhafter Darstellung das Blockschaltbild der in Figur 2 gezeigten Waage 1, die einen Messumformer 10, beispielsweise die in [5] beschriebene und in Figur 3 gezeigte Kraftmesszelle aufweist, die aus einem mit Dehnmessstreifen versehenen Kraftaufnehmeraufnehmer 10 besteht, der mittels Schrauben 1021, 1012 mit einem Waagschalenträger 102 und einem Befestigungsteil 101 verbunden ist, das seinerseits mittels Schrauben 22 mit dem Gehäuse 2 der Waage 1 verbunden ist. Die Dehnmessstreifen sind über ein Flachbandkabel 1011 mit einem Schaltungsmodul 103 verbunden, auf dem nachstehend näher beschriebene, unter anderem der Signalkorrektur dienende Module 11, 12, 13, 14, 15A vorgesehen sind. Die in Figur 2 beispielsweise gezeigte modulare Kraftmesszelle weist besondere, in [5] beschriebene Vorteile auf. Das erfindungsgemässe Verfahren ist jedoch auch bei einem beliebigen anderen strukturellen Aufbau der Waage realisierbar.

Vom Messumformer 10 wird ein zu einer Last korrespondierendes analoges Messsignal ms_{A} über eine zur Verarbeitung analoger Signale dienende erste Signalverarbeitungseinheit 11 an einen Analog/Digital-Wandler 12 abgegeben, der das digitalisierte Messsignal ms_{D} an eine zur Verarbeitung digitaler Signale dienende zweite Signalverarbeitungseinheit 13 abgibt, in der das digitalisierte Messsignal ms_{D} anhand von Drift-Parametern P1, P2, ... derart korrigiert wird, dass durch Drifterscheinungen, insbesondere durch Kriechen verursachte Signalabweichungen kompensiert werden. Zu diesem Zweck ist die zweite Signalverarbeitungseinheit 13 mit einem Prozessor 130, vorzugsweise einem Signalprozessor versehen und mit einer Speichereinheit 15 bzw. 15A verbunden. Zur Durchführung des erfindungsgemässen Verfahrens wird vom Signalprozessor 130 ein Optimierungsprogramm P_{OPT} abgearbeitet, das ebenso wie Listen pl mit den Drift-Parametern P1, P2, ... und registrierte Signalverläufe s1, s2, ... in der Speichereinheit 15 abgelegt ist.

Von der zweiten Signalverarbeitungseinheit 13 wird das korrigierte digitale Messsignal ms_{DK} an einen Haupt- oder Host-Prozessor 16 abgegeben, der mit der Speichereinheit 15, 15B, mit einer Eingabeeinheit 19, beispielsweise einer Tastatur, mit einer Anzeige 18, beispielsweise einer Flüssigkristallanzeige, einem Printer 17 und einem Zentralrechner 20 verbunden ist. Die Arbeitsaufteilung zwischen den Prozessoren 130 und 16 bei der Durchführung des Verfahrens kann beliebig festgelegt werden. Grundsätzlich ist nur ein Prozessor zwingend notwendig. Entsprechend erfolgt die Aufteilung oder die gemeinsame Nutzung der Speicherbereiche 15A, 15B in der Speichereinheit 15. Der Signalprozessor 130 kann beispielsweise, gesteuert durch den Host-Prozessor 16 nur einzelne Verfahrensschritte durchführen und die Ergebnisse zur weiteren Verarbeitung weiterleiten.

Ferner ist in Figur 1 gezeigt, dass Signale, die den Zustand der Waage 1 und/oder äussere Einflüsse beschreiben, dem Signalprozessor 130 von Sensoren 14 über den Analog/DigitalWandler 12 und dem Hostprozessor 16 von Sensoren 140 direkt zuführbar sind.

Weiter sind in Figur 1 Signalverläufe s1, ..., s-n gezeigt, die als kontinuierliche Amplitudenverläufe in Funktion der Zeit oder als Amplituden/Zeit-Wertepaare, vorzugsweise verknüpft mit einer Zeit- und/oder Datumsinformation in der Speichereinheit 15; 15A, beispielsweise in einem dort vorgesehenen Zirkularpuffer, registriert werden. Die Signalverläufe s1, ..., s-n sind nicht oder nur teilweise korrigiert, damit sie über den Messvorgang und die Messvorrichtung unverfälschte Informationen liefern. Die gespeicherten Signalverläufe s1, ..., s-n dienen erfindungsgemäss der späteren Optimierung der Waage 1 und nicht der Auswertung durch den Anwender, die normalerweise unmittelbar nach Abschluss eines Mess- bzw. Wägevorgangs parallel erfolgt.

Zur Optimierung der Waage 1 sollen dabei nur Signalverläufe s1, ..., s-n verwendet werden, die nicht durch eine oder mehrere der in Figur 2 symbolisch gezeigten störenden Einwirkungen d_{A}, d_{E}, d_{M}, d_{W}, d_{T}, d_{L} belastet sind. Beispielsweise wurde bei der Aufnahme des Signalverlaufs s2 eine elektrische Störung d_{E} registriert, weshalb dieser Signalverlauf s2 für den Optimierungsprozess nicht verwendet und unter Umständen gar nicht abgespeichert wird. Die mit den Signalverläufen s1, ..., s-n abgespeicherte Zeitinformation erlaubt beispielsweise die Überwachung der Alterung oder die indirekte Qualitätsprüfung der Signalverläufe s1, ..., s-n. Signalverläufe s1, ..., s-n, die bei einer früheren Optimierung der Waage bereits berücksichtigt wurden, werden vorzugsweise in der Speichereinheit 15 gelöscht. Anfänglich als verwertbar qualifizierte und abgespeicherte Signalverläufe s1, ..., s-n können nachträglich verworfen werden, falls zur registrierten Zeit mehrere anderweitige Störungen registriert wurden. Beispielsweise kann von einem Zentralrechner 20 eine Mitteilung an die dezentral installierten Waagen gesandt werden, dass am XX.XX.XXXX von YY.YY bis ZZ.ZZ eine elektrische Störung aufgetreten ist, die verschiedene Systeme beeinträchtigt hat. In der Waage 1 können daher in diesen Zeitraum fallende, unzuverlässige Signalverläufe s2 verworfen werden.

Figur 2 zeigt in beispielhafter Ausgestaltung eine zur Durchführung des erfindungsgemässen Verfahrens geeignete Waage 1, in der die in Figur 1 gezeigten Komponenten 10, 11, ... in einem Gehäuse 2 integriert sind.

Symbolisch dargestellt ist eine nicht vollständige Reihe von Einwirkungen d_{A}, d_{E}, d_{M}, d_{W}, d_{T} und d_{L}, die den Zustand der Waage 1 und das Messverhalten der Waage 1 bzw. den jeweiligen Messverlauf bestimmen oder zumindest beeinflussen.

Primär sind die Einwirkungen des Anwenders d_{A}, d.h. die vorgenommenen Einstellungen der Waage 1 und die durchgeführten Anwendungen zu beachten, welche den aktuellen Zustand der Waage 1 und deren Verhalten bestimmen. Beispielsweise sind vom Anwender gewählte Prozess-Parameter für die Signalverarbeitung oder das Öffnen einer Tür, die dem Abschliessen des Wägeraums dient, von Bedeutung. Ferner ist die Geschichte der früher durchgeführten Anwendungen bzw. Messungen von Bedeutung, wie dies in [4] beschrieben ist.

Weiter sind Einwirkungen d_{E} der Stromversorgung sowie elektrische Störfelder, mechanische Einwirkungen wie Vibrationen, thermische Einwirkungen d_{T}, Umgebungseinwirkungen d_{W}, beispielsweise Wind und Luftfeuchtigkeit, sowie das Verhalten d_{L} und Eigenschaften der gemessenen Last von grosser Bedeutung. Wesentlich sind Wechselwirkungen zwischen der Last und der Umgebung. Beispielsweise kann eine Last Feuchtigkeit an die Umgebungsluft abgeben oder von ihr aufnehmen. Ferner besteht ein kontinuierlicher Wärmeaustausch zwischen der Last und der Umgebung, wodurch störende Konvektionsströmungen verursacht werden können. Die Abgabe oder Aufnahme von Luftfeuchtigkeit oder die durch Wärmeaustausch verursachte Konvektion können zu Fehlanzeigen führen, die sich einem durch Kriechen verursachten Drift überlagern. Sofern der durch Kriechen verursachte Drift durch die Waage korrekt kompensiert wird, verbleibt ein durch die Laständerung verursachter Drift, der für die nachstehend beschriebenen Optimierungsschritte nicht als Kriechen interpretiert werden soll. Sofern eine Änderung der Anzeige um eine oder mehrere Einheiten nicht durch Kriechen, sondern durch eine Laständerung oder weitere Einflüsse erfolgt ist, ist dies festzustellen und der entsprechende Signalverlauf s-x zu verwerfen.

Die Evaluation der Signalverläufe s1, ..., s-n erfolgt vorzugsweise durch Ermittlung und Auswertung von Zustandsmerkmalen der Waage, der von den Einwirkungen durch den Anwender oder von Einwirkungen aus der Umgebung abhängig ist, und/oder durch Ermittlung und Auswertung von Signalverlaufsmerkmale, die aus den Signalverläufen s1, ..., s-n extrahiert werden.

Der Zustand der Waage umfasst vorzugsweise alle Elemente, die einen Einfluss auf eine Messanwendung haben, aus der ein Signalverlauf s gewonnen wird. Inbesondere wird der Zustand der Waage nicht nur durch die Betriebseinstellungen des Anwenders, sondern auch durch die aufgelegte Last und die Umgebung bestimmt.

Ein nicht durch Kriechen verursachter Drift bei einem Messvorgang kann nun mit wenigen Ausnahmen aus den Zustandsmerkmalen und/oder aus den Signalverlaufsmerkmalen ermittelt werden.

Beispielsweise werden die Feuchtigkeit und die Temperatur der Umgebungsluft gemessen. Ferner wird vom Anwender gegebenenfalls eingegeben, dass eine Flüssigkeit gemessen wird. Anhand dieser Zustandsmerkmale kann eine zu erwartende Laständerung aufgrund der Verdunstung von Flüssigkeit berechnet oder ein entsprechendes Risiko berücksichtigt werden.

Sofern die Temperatur der Umgebungsluft und die Temperatur der Last gemessen werden, kann ein Drift aufgrund von Konvektion vorhergesagt werden, die sich reduziert, bis ein Temperaturausgleich erfolgt ist.

Entsprechende oder ergänzende Informationen können hingegen auch durch die Ermittlung von Signalverlaufsmerkmalen gewonnen werden. Bei Laständerungen aufgrund von Feuchtigkeitsabgaben ist normalerweise ein linearer Drift zu beobachten, während der Drift bei Kriechen eher exponentiell verläuft.

Die Driftverläufe bei Belastung und Entlastung sind bei Kriechen normalerweise symmetrisch, während ein durch eine Laständerung verursachter Drift nach Entlastung bzw. Entfernung der Last von der Waage vollständig entfällt. Die Ermittlung von Signalverlaufsmerkmalen aus den Signalverläufen s ist daher, obwohl meist schwieriger, besonders wertvoll hinsichtlich der Beurteilung der Verwertbarkeit derselben.

Die gespeicherten Signalverläufe s1, s3, ... werden nun erfindungsgemäss zur Optimierung der Waage 1 verwendet. Dabei wird vorgesehen, dass die Waage 1 nicht nur herstellerseitig bei der Ersteinstellung der Waage 1, sondern auch anwenderseitig wiederholt optimiert wird. Dabei werden Drift-Parameter P1, P2, ... definiert, anhand derer Driftabweichungen korrigiert werden. Die einmalige Wahl statischer Drift-Parameter P1, P2, ... und die Korrektur von Driftabweichungen sind aus [4] bekannt. Erfindungsgemäss werden diese Drift-Parameter P1, P2, ... nach der Installation der Waage 1 beim Anwender wiederholt überprüft und an die veränderten Eigenschaften der Waage 1 adaptiert und gegebenenfalls vor Anwendung nochmals überprüft und/oder dem Anwender zur Genehmigung vorgelegt.

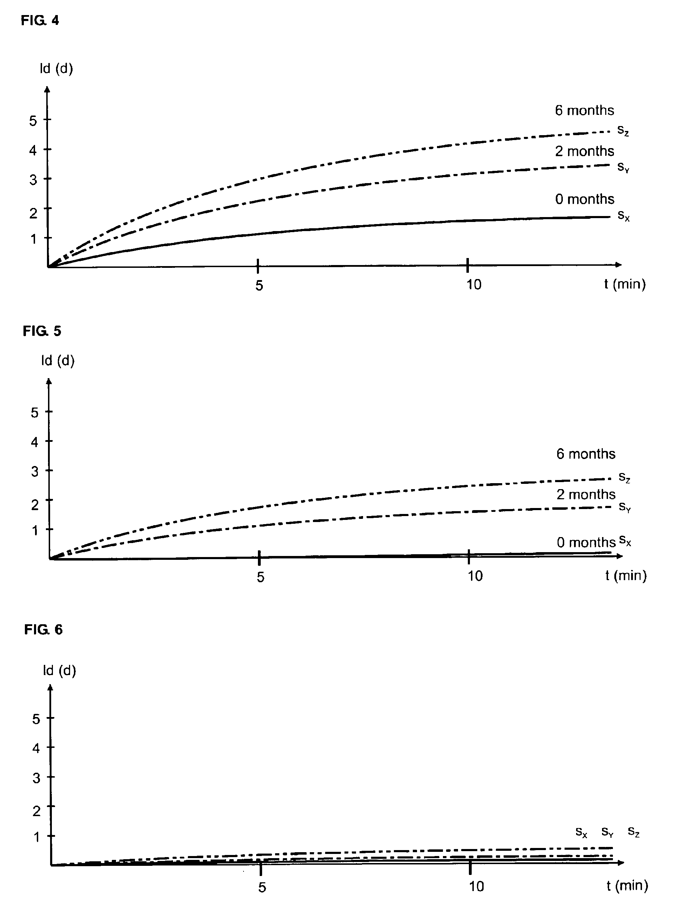

In Figur 4 sind Änderungen des durch Kriechen begründeten Driftverhaltens der Waage 1 ersichtlich. Dabei sind in zeitlichen Abständen von mehreren Monaten aufgenommene, unkorrigierte Driftverläufe s_{X}, s_{Y}, s_{Z} dargestellt, die nach Auflegen einer Last auftreten. Angezeigt sind innerhalb von 15 Minuten auftretende Änderungen der Anzeige in Digits oder Anzeigeeinheiten. Daraus ist ersichtlich, dass sich das durch Kriechen begründete Driftverhalten der Waage 1 mit der Zeit ändert.

Sofern die Driftabweichungen bei der Ersteinstellung anhand der statischen Drift-Parameter P1, P2, ... korrekt kompensiert wurden, resultieren innerhalb der angegebenen zeitlichen Abstände die in Figur 5 gezeigten korrigierten Driftverläufe s_{X}, s_{Y}, s_{Z}. Der erste Verlauf s_{X} nach 0 Monaten weist praktisch keinen Drift auf. Nach zwei bzw. sechs Monaten entstehen aufgrund von Änderungen der Geräteeigenschaften hingegen wieder störende Driftkomponenten auf, die anhand des erfindungsgemässen Verfahrens wie folgt korrigiert werden.

Die Initialisierung des erfindungsgemässen Verfahrens erfolgt beispielsweise automatisch in festgelegten zeitlichen Abständen, automatisch nach Feststellung störender Driftabweichungen oder manuell durch den Anwender.

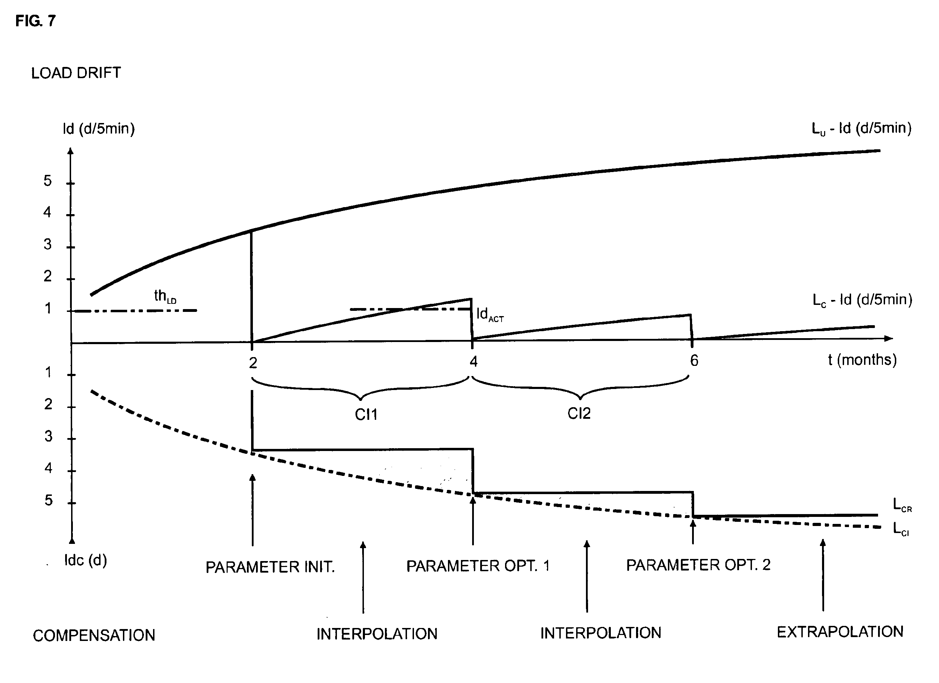

Beispielsweise wird anhand der gespeicherten Signalverläufe s1, ..., s-n das aktuelle Mass ld_{ACT} auftretender Drifterscheinungen festgestellt und mit einem entsprechenden Schwellwert th_{LD} verglichen, wonach nach Überschreiten des Schwellwerts th_{LD} das Verfahren zur Optimierung der Drift-Parameter P1, P2, ... durchgeführt wird (siehe Figur 7).

Zur Optimierung der Werte der Drift-Parameter P1, P2, ... werden zumindest einzelne der früher registrierten Signalverläufe s1, s3, ... aus der Speichereinheit 15 entnommen und der Signalverarbeitungseinheit 13 sequentiell zugeführt, in der die Korrektur von Drifterscheinungen anhand neuer Werte für die Drift-Parameter P1, P2, ... erfolgt, wonach die korrigierten Signalverläufe s1, s3, ... evaluiert und optimierte Werte für die Drift-Parameter P1, P2, ... gespeichert werden. Beispielsweise wird der in Figur 4 gezeigte, nach sechs Monaten aufgenommene, unkorrigierte Signalverlauf aus der Speichereinheit 15 entnommen und der Signalverarbeitungseinheit 13 zugeführt, in der das Korrekturverfahren anhand der aktuellen Drift-Parameter P1, P2, ... durchgeführt wird. Durch Änderung der Drift-Parameter P1, P2, ... wird der Signalverlauf ausgehend von dem in Figur 5 gezeigten Verlauf variiert, bis ein optimaler Verlauf gefunden wird. Beispielsweise werden die Signalverläufe s1, ..., s-n ausgehend von aktuellen Werten für die Drift-Parameter schrittweise überprüft, wonach für jeden Prüfschritt, gegebenenfalls nach Mittelwertbildung der Messresultate, ein Prüfwert berechnet wird, welcher der Güte der erzielten Korrektur entspricht. Die für jeden Prüfschritt ermittelten Prüfwerte werden anschliessend miteinander verglichen, wonach die Werte für die Drift-Parameter P1, P2, ... des besten Prüfwerts als neue, aktuelle Werte abgespeichert werden.

Figur 6 zeigt zu den Signalverläufen von Figur 4 korrespondierende und mittels individuell angepassten Drift-Parametern P1, P2, ... praktisch vollständig korrigierte Signalverläufe s_{X}, s_{Y}, s_{Z}.

Das erfindungsgemässe Verfahren wird anhand von Figur 7 mit anderem Blickwinkel noch ergänzend erläutert. Dargestellt ist ein Kurvenverlauf L_{U} der das durch Kriechen begründete unkompensierte Driftverhalten bzw. entsprechende Driftwerte, die fünf Minuten nach Auflegen einer Last auftreten, über mehrere Monate aufzeigt. Aufgenommen wurde die Kurve L_{U} durch sequentielle Messungen und Interpolation der Messwerte.

Die Kurve L_{CR} zeigt den stufenweisen Verlauf der in Schritten von zwei Monaten angepassten Kompensationswerte, die anhand der adaptiv angepassten Werte der Drift-Parameter P1, P2, ... ermittelt wurden. Die sägezahnförmig verlaufende Kurve L_{C} zeigt das durch Kriechen begründete und anhand der Kompensationswerte L_{CR} punktuell, innerhalb von Intervallen CI1, CI2, ... optimal korrigierte Driftverhalten der Waage 1.

Eingezeichnet ist ferner ein vorzugsweise vorgesehener Schwellwert th_{LD}, der einer maximal tolerierbaren Driftabweichung entspricht und nach dessen Überschreiten, das erfindungsgemässe Verfahren durchgeführt wird. Dadurch wird das erfindungsgemässe Verfahren jeweils so früh wie notwendig und so spät wie möglich durchgeführt.

Eingezeichnet ist ferner ein durch Interpolation und Extrapolation ermittelter Verlauf einer Kurve L_{CI}, nahe der die idealen Kompensationswerte liegen. Der extrapolierte Bereich der Kurve kann zur Optimierung der sägezahnförmig verlaufenden Kurve L_{C} und somit zur weiteren Optimierung des Driftverhaltens der Waage 1 verwendet werden.

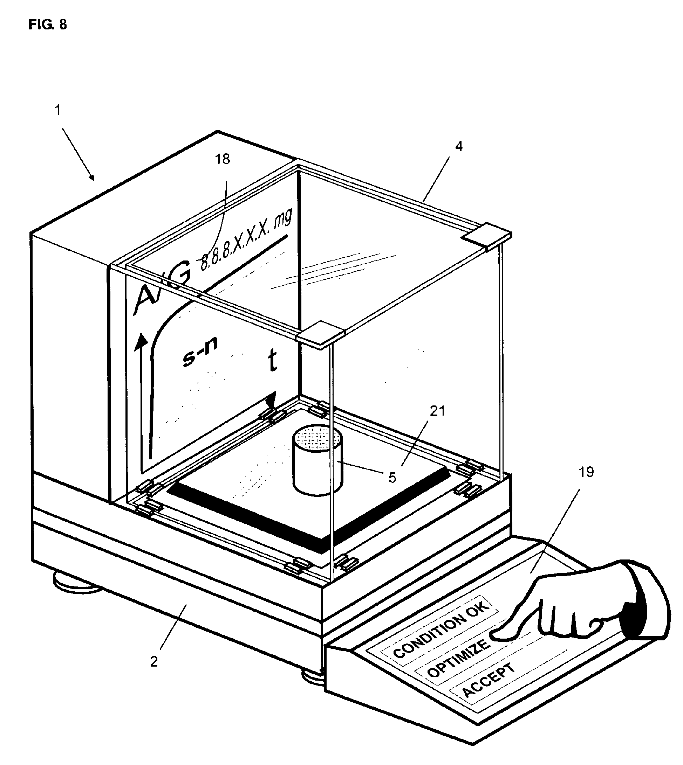

Figur 8 zeigt die Waage 1 von Figur 2 in einer zur automatischen oder halbautomatischen Durchführung des erfindungsgemässen Verfahrens geeigneten Ausgestaltung.

Auf die Waagschale 21 der Waage 1 wurde vom Anwender eine Last 5 aufgelegt und während einer längeren Zeit belassen. Auf der Anzeige 18 der Waage 1, beispielsweise einem Flüssigkristall-Bildschirm, ist der während der Zeit t registrierte Signalverlauf s-n aufgezeigt, der einen Drift erkennen lässt.

Dieser Vorgang kann von einer Waage mit wenigstens einem automatisch aufsetzbaren Justiergewicht auch ohne Unterstützung des Anwenders durchgeführt werden.

Der Anwender kann nun auf der Tastatur 19 eingeben, dass der Zustand der Waage für die Durchführung des Optimierungsverfahrens geeignet ist. Ferner kann er das Optimierungsverfahren durch einen weiteren Tastendruck starten und die optimierten Werte für die Drift-Parameter P1, P2, ... später mit einem weiteren Tastendruck übernehmen.

Sofern das Justiergewicht automatisch aufgelegt wird, kann das Optimierungsprogramm alternativ auch selbsttätig einen Drift feststellen und das Optimierungsverfahren automatisch starten, wonach optimierte Werte für die Drift-Parameter P1, P2, ... automatisch oder erst nach Vorliegen einer Bestätigung durch den Anwender anstelle der bisherigen Parameterwerte abgespeichert werden.

Mittels der in Figur 8 gezeigten Waage 1 können die Werte für die Drift-Parameter P1, P2, ... daher anhand eines aktuell aufgenommenen Signalverlaufs s-n optimiert werden. Alternativ kann die Waage 1 auch zur automatischen Optimierung der Werte für die Drift-Parameter P1, P2, ... mittels Signalverläufen s1,..., s-n vorgesehen sein, die früher registriert wurden. Der Anwender hat vorzugsweise wiederum die Möglichkeit, für jeden zu speichernden und später zu verwendenden Signalverlauf s den geeigneten Zustand zu bestätigen (siehe Taste oder Eingabefeld <CONDITION OK>), das Optimierungsverfahren zu starten (siehe Taste oder Eingabefeld <OPTIMIZE>) und die optimierten Werte für die Drift-Parameter P1, P2, ... anstelle der bisherigen Werte zu übernehmen (siehe Taste ODER Eingabefeld <ACCEPT>).

Das erfindungsgemässe Verfahren und die erfindungsgemässe Kraftmessvorrichtung 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Kraftsensoren, die gegebenenfalls Teil einer Waage bilden können, einsetzbar. Das Verfahren ist vielseitig anwendbar und nicht auf die explizit genannten Faktoren beschränkt, welche Drifterscheinungen verursachen können. Ferner ist das Verfahren natürlich auch nicht auf eine bestimmte Wahl, Konfiguration, Gruppierung und Anwendung der Drift-Parameter P1, P2, ... beschränkt.

Zur Speicherung von Signalverläufen s1, ..., s-n sind verschiedene zentral oder dezentral angeordnete Speichermedien, wie beispielsweise magnetisch oder optisch beschreib- und lesbare Speichergeräte sowie statische oder dynamische Halbleiterspeicher, verwendbar.

Literaturverzeichnis
[1] EP 0 945 717 A1
[2] Bauen Sie Ihre Qualität auf solidem Grund!, Firmenbrochure, Mettler Toldeo GmbH, Januar 2001
[3] Wägefibel, Mettler Toldeo GmbH, April 2001
[4] U.S. 4'691'290
[5] WO 03/078937 A1
[6] U.S. 4'836'308

## Patentansprüche

1. Verfahren zur Korrektur von auf dem Kriechen beruhenden Drifterscheinungen bei einer elektronischen Kraftmessvorrichtung (1), insbesondere einer Waage, die einen Messumformer (10) aufweist, durch den ein einer einwirkenden Last entsprechendes Messsignal (ms) gebildet wird, das einer von wenigstens einem Prozessor (130; 16) gestützten, der Verarbeitung digitaler Signale dienender Signalverarbeitungseinheit (13) zugeführt wird, mittels der Driftabweichungen kompensierbar sind und die dazu mittels des Prozessors (130; 16) auf in einer Speichereinheit (15; 15A; 15B) abgelegte Drift-Parameter (P1, P2, ...) zugreift, anhand derer ein zeitabhängiger Korrekturwert kalkuliert und damit der durch Kriechen verursachte Driftfehler des Messsignals (ms) korrigiert wird, wobei mittels des Prozessors (130; 16) und der Signalverarbeitungseinheit (13) anhand eines in der Speichereinheit (15; 15A; 15B) abgelegten Optimierungsprogramms (P_{OPT}) innerhalb von zeitlichen Abständen (CI1, CI2), selbsttätig neue, optimierte Werte für die Drift-Parameter (P1, P2, ...) des durch Kriechen verursachten Driftfehler des Messsignals (ms) ermittelt und in der Speichereinheit (15; 15A; 15B) abgelegt werden, **dadurch gekennzeichnet, dass** unkorrigierte oder nur teilweise korrigierte Signalverläufe (s1, ..., s-n) des Messsignals (ms) bei der Durchführung von Messungen bei Testvorgängen und/oder bei Kalibrierungsvorgängen verknüpft mit einer Zeit- und einer Datumsinformation gespeichert werden und dass diese neuen, optimierten Werte für die Drift-Parameter (P1, P2, ...) unter Verwendung der gespeicherten Signalverläufe (s1, ..., s-n) des Messsignals (ms) ermittelt werden.

2. Verfahren nach Anspruch 1, **dadurch gekennzeichnet, dass** die Signalverläufe (s1, ..., s-n); bei der Durchführung von Messungen bei Testvorgängen und/oder bei Kalibrierungsvorgängen gespeichert werden, wobei Signalverläufe vorzugsweise bei Belastung und Entlastung aufgenommen werden.

3. Verfahren nach Anspruch 2, **dadurch gekennzeichnet, dass**
a) anhand der gespeicherten Signalverläufe (s1, ..., s-n) das aktuelle Mass (ld_{ACT}) auftretender Drifterscheinungen festgestellt und mit einem entsprechenden Schwellwert (th_{LD}) verglichen wird, wonach nach Überschreiten des Schwellwerts (th_{LD}) das Verfahren zur Optimierung der Drift-Parameter (P1, P2, ...) durchgeführt wird;
b) das Verfahren zur Korrektur von Drifterscheinungen vom Anwender oder automatisch mittels einer Zeitkontrollfunktion initialisiert wird.

4. Verfahren nach Anspruch 2 oder 3, **dadurch gekennzeichnet, dass** zumindest einzelne der Signalverläufe (s1, ..., s-n) aus der Speichereinheit (15; 15A; 15B) entnommen und der Signalverarbeitungseinheit (13) sequentiell zugeführt werden, in der die Korrektur von Drifterscheinungen anhand neuer Werte für die Drift-Parameter (P1, P2, ...) erfolgt, wonach die korrigierten Signalverläufe (s1, ..., s-n) evaluiert und optimierte Werte für die Drift-Parameter (P1, P2, ...) gespeichert werden.

5. Verfahren nach Anspruch 2, 3 oder 4, **dadurch gekennzeichnet, dass** die Signalverläufe (s1, ..., s-n) ausgehend von aktuellen Werten für die Drift-Parameter (P1, P2, ...) schrittweise überprüft werden, wonach für jeden Prüfschritt, gegebenenfalls nach Mittelwertbildung der Messresultate, ein Prüfwert berechnet wird, welcher der Güte der Korrektur entspricht, und die Werte für die Drift-Parameter (P1, P2, ...) des besten Prüfwerts als neue, aktuelle Werte für die Drift-Parameter (P1, P2, ...) abgespeichert werden.

6. Verfahren nach einem der Ansprüche 2-5, **dadurch gekennzeichnet, dass** durch Einwirkungen auf die Kraftmessvorrichtung resultierende Zustandsmerkmale der Kraftmessvorrichtung und/oder aus den Signalverläufen (s1, ..., s-n) Signalverlaufsmerkmale ermittelt werden; anhand derer die zur Optimierung der Drift-Parameter (P1, P2, ...) geeigneten Daten ausgewählt und ungeeignete Daten verworfen werden.

7. Verfahren nach Anspruch 5 oder 6, **dadurch gekennzeichnet, dass** Daten weiter berücksichtigt werden, die vom Anwender genehmigt wurden und/oder dass Daten nicht weiter berücksichtigt werden,
a) die eine Zeitinformation aufweisen, für die Abweichungen vom Normalbetrieb der Kraftmessvorrichtung (1) registriert wurden,
b) für die störende Umgebungseinflüsse, wie mechanische Vibration, Luftfeuchtigkeit, Störungen der Stromversorgung, störende von der Last bzw. dem Messobjekt abhängige oder von der Last bzw. dem Messobjekt unabhängige Luftbewegungen, oder störende Temperatureinwirkungen, registriert wurden;
c) für die gegebenenfalls durch Feuchtigkeitsabgabe oder Feuchtigkeitsaufnahme verursachte Laständerungen während der Messung gegebenenfalls aufgrund von bei Belastung und Entlastung asymmetrischen Driftverläufen registriert wurden; und/oder
d) für die störende Einwirkungen früherer Messanwendungen registriert wurden.

8. Verfahren nach einem der Ansprüche 2-7, **dadurch gekennzeichnet, dass** die Verwertbarkeit eines bei Belastung und/oder bei Belastung und Entlastung aktuell aufgenommenen, unkorrigierten oder nur teilweise korrigierten Signalverlaufs (s_{A}) durch den Anwender oder automatisch durch das Optimierungsprogramm (P_{OPT}) bestätigt wird, dass, initialisiert durch den Anwender oder initialisiert durch das Optimierungsprogramm (P_{OPT}), zumindest anhand des aktuell aufgenommenen Signalverlaufs (s_{A}) selbsttätig neue, optimierte Werte für alle oder nur die betreffenden Drift-Parameter (P1, P2, ...) ermittelt werden.

9. Verfahren nach Anspruch 8, **dadurch gekennzeichnet, dass** die neuen Werte für die Drift-Parameter (P1, P2, ...) nach Bestätigung durch den Anwender anstelle der bisherigen Drift-Parameter (P1, P2, ...) in der Speichereinheit (15; 15A; 15B) abgelegt werden.

10. Verfahren nach einem der Ansprüche 1-9, **dadurch gekennzeichnet, dass** über die gesamte Betriebszeit der Kraftmessvorrichtung (1) mindestens ein Verlauf (L_{U}) von unkompensierten Driftwerten der Kraftmessvorrichtung (1) registriert und ein dazu korrespondierender Verlauf (L_{CI}) von Kompensationswerten nachgeführt und zur Korrektur von Drifterscheinungen entsprechend verwendet wird.

11. Kraftmessvorrichtung (1), insbesondere Waage, mit einem Messumformer (10), der zur Abgabe eines einer einwirkenden Last entsprechenden Messsignals (ms) dient, das über einen Analog/Digital-Wandler (12) einer von wenigstens einem Prozessor (130; 16) gestützten Signalverarbeitungseinheit (13) zuführbar ist, mittels der Driftabweichungen kompensierbar sind und die dazu mittels des Prozessors (130; 16) auf in einer Speichereinheit (15; 15A; 15B) abgelegte Drift-Parameter (P1, P2, ...) zugreifen kann, anhand derer ein zeitabhängiger Korrekturwert kalkulierbar und damit der durch Kriechen verursachte Driftfehler des Messsignals (ms) korrigierbar ist, wobei mittels des Prozessors (130; 16) und der Signalverarbeitungseinheit (13) anhand eines in der Speichereinheit (15; 15A; 15B) abgelegten Optimierungsprogramms (P_{OPT}) innerhalb von zeitlichen Abständen (CI1, CI2) selbsttätig neue, optimierte Werte für die Drift-Parameter (P1, P2, ...) des durch Kriechen verursachten Driftfehler des Messsignals (ms) ermittelbar und anstelle der bisher verwendeten Werte in der Speichereinheit (15; 15A; 15B) speicherbar sind, **dadurch gekennzeichnet, dass** unkorrigierte oder nur teilweise korrigierte Signalverläufe (s1, ..., s-n) des Messsignals (ms) bei der Durchführung von Messungen bei Testvorgängen und/oder bei Kalibrierungsvorgängen in der Speichereinheit (15; 15A; 15B) verknüpft mit einer Zeit- und Datumsinformation speicherbar sind und dass diese neuen, optimierten Werte für die Drift-Parameter (P1, P2, ...) unter Verwendung der gespeicherten Signalverläufe (s1, ..., s-n) des Messsignals (ms) ermittelbar sind.

12. Kraftmessvorrichtung (1) nach Anspruch 11, **dadurch gekennzeichnet, dass** das Optimierungsprogramms (P_{OPT}) zur Durchführung des Verfahrens nach einem der Ansprüche 1-11 geeignet ist.

13. Kraftmessvorrichtung (1) nach Anspruch 11 oder 12, **dadurch gekennzeichnet, dass** die Speichereinheit (15; 15A; 15B) ein lesbares und beschreibbares, zur Speicherung von Signalverläufen (s1, ..., s-n) geeignetes Speichermedium ist.

14. Kraftmessvorrichtung (1) nach Anspruch 12, oder 13, **dadurch gekennzeichnet, dass** Mittel, einschliesslich wenigstens eines Justiergewichts vorgesehen sind, mittels derer die Kraftmessvorrichtung (1) kalibrierbar ist und mittels derer ein Signalverlauf (s1) registrierbar ist, anhand dessen durch das Optimierungsprogramms (P_{OPT}) neue Drift-Parameter (P1, P2, ...) registrierbar sind.

15. Kraftmessvorrichtung (1) nach Anspruch 12, 13, oder 14, **dadurch gekennzeichnet, dass** Mittel zur Eingabe des Zustands der Kraftmessvorrichtung (1) und oder zur Initialisierung des Verfahrens nach einem der Ansprüche 1-10 vorgesehen sind und/oder dass Mittel zur anwenderseitigen Bestätigung der Übernahme der optimierten Werte für die Drift-Parameter (P1, P2, ...) vorgesehen sind.

## Claims

1. Method for the correction of drift phenomena caused by material creep in an electronic force-measuring device (1), in particular a balance that comprises a measuring transducer (10) through which a measuring signal (ms) is formed which is representative of a load applied to the force-measuring device, wherein said measuring signal is delivered to a signal-processing unit (13) that is supported by at least one processor (130; 16) and serves to process digital signals, said signal-processing unit (13) being capable of compensating drift deviations, for which purpose the signal-processing unit by means of the processor (130; 16) accesses drift parameters (P1, P2, ...) that are stored in a memory unit (15; 15A; 15B) and serve as basis for calculating a time-dependent correction value by means of which the drift error of the measuring signal (ms) is corrected, wherein by means of the processor (130; 16) and the signal-processing unit (13) and under the control of an optimization program (P_{OPT}) that is stored in the memory unit (15; 15A; 15B) new, optimized values for the drift parameters (P1, P2, ...) of the creep-based drift error of the measuring signal (ms) are determined automatically at time intervals (CI1, CI2) and stored in the memory unit (15; 15A; 15B), **characterized in that** during the performance of measurements in test processes and/or in calibration processes uncorrected or only partially corrected signal profiles (s1, ..., s-n) of the measuring signal (ms) are stored together with the respective time and date information, and that said new, optimized values for the drift parameters (P1, P2, ...) are determined with the use of the stored signal profiles (s1, ..., s-n) of the measuring signal (ms).

2. Method according to claim 1, **characterized in that** the signal profiles (s1, ..., s-n) are stored during the performance of measurements in test processes and/or in calibration processes, wherein the recording of signal profiles takes place preferably at the times when the load is being applied as well as when it is being removed.

3. Method according claim 2, **characterized in that**
a) on the basis of the stored signal profiles (s1, ..., s-n) the magnitude (ld_{ACT}) of currently occurring drift phenomena is determined and compared to a corresponding threshold value (th_{LD}), and after the threshold value (th_{LD}) has been found to be exceeded, the method for optimizing the drift parameters (P1, P2, ...) is carried out; and
b) the method for the correction of drift phenomena is initiated either by the user or automatically by means of a time control function.

4. Method according claim 2 or 3, **characterized in that** at least individual ones of the signal profiles (s1, ..., s-n) are retrieved from the memory unit (15; 15A; 15B) and are sequentially delivered to the signal-processing unit (13) in which the correction of drift phenomena takes place based on new values for the drift parameters (P1, P2, ...), whereupon the corrected signal profiles (s1, ..., s-n) are evaluated, and optimized values for the drift parameters (P1, P2, ...) are stored in memory.

5. Method according to claim 2, 3 or 4, **characterized in that** starting from current values for the drift parameters (P1, P2), the signal profiles (s1, ..., s-n) are subjected to a stepwise examination and a test value is subsequently calculated for each step of the examination, possibly after determining the mean value for the measuring results, which test value corresponds to the goodness of the correction, whereupon the values for the drift parameters (P1, P2, ...) associated with the best test value are stored as the new current values for the drift parameters (P1, P2, ...).

6. Method according to one of the claims 2 to 5, **characterized in that** characteristic traits of the force-measuring device which are the result of factors acting on the force-measuring device are determined and/or that characteristic signal profile traits are determined from the signal profiles (s1, ..., s-n), based on which characteristic traits the data that are suitable for optimizing the drift parameters (P1, P2, ...) are selected and data that are found unsuitable are dropped from further consideration.

7. Method according to claim 5 or 6, **characterized in that** data that have been accepted by the user are further kept under consideration and/or that no further consideration is given to data:
a) that include a time information associated with a time at which deviations from the normal operating mode of the force-measuring device (1) were recorded,
b) that are associated with periods when extraneous disturbances were recorded, such as mechanical vibrations, atmospheric humidity, irregularities in the line power supply, disturbances caused by air drafts that are either dependent or independent of the load or the measuring object, or temperature-related disturbances,
c) for which load changes were registered that were possibly caused by release or absorption of moisture during the measurement, which may have been determined based on asymmetric drift profiles during application and removal of the load, and/or
d) for which disturbances due to previous measurement applications were registered.

8. Method according to one of the claims 2 to 7, **characterized in that** an uncorrected or only partially corrected signal profile (s_{A}) currently recorded either in the process of applying the load or during both application and removal of the load is confirmed either by the user or automatically by the optimization program (P_{OPT}) as being acceptable for use, and that at the initiation of the user or of the optimization program (P_{OPT}), new optimized values are determined automatically based on at least the currently recorded signal profile (s_{A}), either for all drift parameters (P1, P2, ...) or only for the currently involved drift parameters.

9. Method according to claim 8, **characterized in that** the new values of the drift parameters (P1, P2, ...) after having been confirmed by the user are stored in the memory unit (15; 15A; 15B) to replace the previous drift parameters (P1, P2, ...).

10. Method according to one of the claims 1 to 9, **characterized in that** over the entire operating time of the force-measuring device (1) at least one time profile (L_{U}) of uncompensated drift values of the force-measuring device (1) is recorded and a time profile (L_{CI}) of compensation values associated with said non-compensated drift values is updated and used accordingly for the correction of drift phenomena.

11. Force-measuring device (1), in particular a balance with a measuring transducer (10) that serves to deliver a measuring signal (ms) which is representative of a load applied to the force-measuring device, wherein said measuring signal can be delivered by way of an analog/digital converter (12) to a signal-processing unit (13) that is supported by at least one processor (130; 16), said signal-processing unit (13) being capable of compensating drift deviations, for which purpose the signal-processing unit by means of the processor (130; 16) can access drift parameters (P1, P2, ...) that are stored in a memory unit (15; 15A; 15B) and serve as basis for calculating a time-dependent correction value by means of which the creep-related drift error of the measuring signal (ms) can be corrected, wherein by means of the processor (130; 16) and the signal-processing unit (13) and under the control of an optimization program (P_{OPT}) that is stored in the memory unit (15; 15A; 15B) new, optimized values for the drift parameters (P1, P2, ...) of the creep-based drift error of the measuring signal (ms) can be determined automatically at time intervals (CI1, CI2) and stored in the memory unit (15; 15A; 15B), **characterized in that** during the performance of measurements in test processes and/or in calibration processes uncorrected or only partially corrected signal profiles (s1, ..., s-n) of the measuring signal (ms) can be stored together with the respective time and date information, and that said new, optimized values for the drift parameters (P1, P2, ...) can be determined with the use of the stored signal profiles (s1, ..., s-n) of the measuring signal (ms).

12. Force-measuring device (1) according to claim 11, **characterized in that** the optimization program (P_{OPT}) is suitable for executing the method according to one of the claims 1 to 11.

13. Force-measuring device (1) according to claim 11 or 12, **characterized in that** the memory unit (15; 15A; 15B) is a memory storage medium with read/write capability, which is suitable for storing the signal profiles (s1, ..., s-n).

14. Force-measuring device (1) according to one of the claims 12 or 13, **characterized in that** means including at least one calibration adjustment weight are provided, by means of which the force-measuring device (1) can be calibrated and by means of which a signal profile (s1) can be registered based on which new drift parameters (P1, P2, ...) can be registered by the optimization program (P_{OPT}).

15. Force-measuring device (1) according to one of the claims 12, 13, or 14, **characterized in that** means are provided for entering the condition of the force-measuring device (1) and/or for initializing the method according to one of the claims 1 to 11, and/or that means are provided which allow the user to confirm the acceptance of the optimized values for the drift parameters (P1, P2, ...).

## Revendications

1. Procédé pour corriger des phénomènes de dérive reposant sur le glissement dans le cas d'un dispositif électronique de mesure de force (1), en particulier d'une balance, qui présente un convertisseur de mesure (10), par lequel un signal de mesure (ms) correspondant à une charge agissante est formé, lequel signal est amené à une unité de traitement de signal (13) assisté par au moins un processeur (130 ; 16), servant au traitement de signaux numériques, unité au moyen de laquelle des écarts de dérive peuvent être compensés et qui a recours à cet effet au processeur (130 ; 16) à des paramètres de dérive (P1, P2, ...) déposés dans une unité de mémoire (15 ; 15A ; 15B), paramètres à l'aide desquels une valeur de correction dépendante du temps est calculée et donc l'erreur de dérive du signal de mesure (ms) provoquée par glissement, est ainsi corrigée, de nouvelles valeurs optimisées pour les paramètres de dérive (P1, P2, ...) des erreurs de dérive, provoquées par glissement, du signal de mesure (ms) étant déterminées automatiquement au moyen du processeur (130 ; 16) et de l'unité de traitement de signal (13) à l'aide d'un programme d'optimisation (P_{OPT}) déposé dans l'unité de mémoire (15 ; 15A ; 15B) dans des intervalles temporels (CI1, CI2) et étant déposées dans l'unité de mémoire (15 ; 15A ; 15B), **caractérisé en ce que** des courbes de signaux (s1, ..., s-n) non corrigées ou seulement partiellement corrigées du signal de mesure (ms) sont stockées lors de la réalisation de mesures en cas d'opérations de test et/ou en cas d'opérations d'étalonnage associées à une information sur le temps et une information sur la date et **en ce que** ces nouvelles valeurs optimisées pour les paramètres de dérive (P1, P2, ...) sont déterminées en utilisant les courbes de signaux (s1, ..., s-n) stockées du signal de mesure (ms) .

2. Procédé selon la revendication 1, **caractérisé en ce que** les courbes de signaux (s1, ..., s-n) sont stockées lors de la réalisation de mesures, lors d'opérations de test et/ou lors d'opérations d'étalonnage, des courbes de signaux étant enregistrées de préférence lors de charge et de décharge.

3. Procédé selon la revendication 2, **caractérisé en ce que**
a) l'ampleur actuelle (1d_{ACT}) de phénomènes de dérive apparaissant est constatée à l'aide des courbes de signaux stockées (s1,..., s-n) et comparée avec une valeur seuil (th_{LD}) correspondante, après quoi le procédé d'optimisation des paramètres de dérive (P1, P2, ...) est mis en oeuvre après le dépassement de la valeur seuil (th_{LD}) ;
b) le procédé pour la correction des phénomènes de dérive est initialisé par l'utilisateur ou automatiquement au moyen d'une fonction de contrôle de temps.

4. Procédé selon la revendication 2 ou 3, **caractérisé en ce qu'**au moins certaines des courbes de signaux (s1, ..., s-n) sont prévues sur l'unité de mémoire (15 ; 15A ; 15B) et sont amenées de façon séquentielle à l'unité de traitement de signal (13), dans laquelle la correction de phénomènes de dérive est effectuée à l'aide de nouvelles valeurs pour les paramètres de dérive (P1, P2, ...), après quoi les courbes de signaux corrigées (s1, ..., s-n) sont évaluées et des valeurs optimisées sont stockées pour les paramètres de dérive (P1, P2, ...).

5. Procédé selon la revendication 2, 3 ou 4, **caractérisé en ce que** les courbes de signaux (s1, ..., s-n) sont vérifiées étape par étape à partir de valeurs actuelles pour les paramètres de dérive (P1, P2 , ...), après quoi une valeur de test est calculée pour chaque étape de test, éventuellement après la formation d'une valeur moyenne pour les résultats de mesure, laquelle valeur test correspond à la qualité de la correction, et les valeurs pour les paramètres de dérive (P1, P2, ...) de la meilleure valeur de test sont sauvegardées comme nouvelles valeurs actuelles pour les paramètres de dérive (P1, P2, ...).

6. Procédé selon l'une des revendications 2 à 3, **caractérisé en ce qu'**on détermine des caractéristiques d'états du dispositif de mesure de force résultantes par des effets sur le dispositif de mesure de force et/ou des caractéristiques de courbe de signal à partir des courbes de signal (s1, ..., s-n) caractéristiques à l'aide desquelles les données appropriées pour l'optimisation des paramètres de dérive (P1, P2, ...) sont sélectionnées et des données inappropriées sont rejetées.

7. Procédé selon la revendication 5 ou 6, **caractérisé en ce qu'**on prend en compte également des données qui ont été approuvées par l'utilisateur et/ou **en ce que** des données qui n'ont pas été prises en compte,
a) lesquelles présentent une information de temps, pour laquelle des écarts par rapport à l'exploitation normale du dispositif de mesure de force (1) sont enregistrés,
b) pour lesquelles des influences d'environnement perturbatrices telles que vibration mécanique, incidents de l'alimentation électrique, déplacements d'air gênants, dépendants de la charge ou de l'objet à mesurer ou indépendants de la charge ou de l'objet à mesurer, ou des effets de température gênants ont été enregistrés ;
c) pour lesquelles des variations de charge provoquées éventuellement par la cession d'humidité ou l'absorption d'humidité ont été enregistrées pendant la mesure éventuellement sur la base de courbes de dérive asymétriques en cas de charge et de décharge ; et/ou
d) pour lesquelles des effets gênants d'applications de mesure antérieures ont été enregistrés.

8. Procédé selon l'une des revendications 2 à 7, **caractérisé en ce que** la possibilité d'utilisation d'une courbe de signal (s_{A}) enregistrée actuellement en cas de charge et/ou en cas de charge et de décharge, non corrigée ou seulement partiellement corrigée est confirmée par l'utilisateur ou automatiquement par le programme d'optimisation (P_{OPT}), **en ce que**, initialisé par l'utilisateur ou initialisé par le programme d'optimisation (P_{OPT}), de nouvelles valeurs optimisée pour tous les paramètres de dérive ou seulement pour les paramètres de dérive concernés (P1, P2, ...) sont déterminées au moins à l'aide de la courbe de signal (s_{A}) actuellement enregistrée.

9. Procédé selon la revendication 8, **caractérisé en ce que** les nouvelles valeurs pour les paramètres de dérive (P1, P2, ...) sont déposées dans l'unité de mémoire (15 ; 15A ; 15B) après confirmation par l'utilisateur au lieu des anciens paramètres de dérive (P1, P2, ...).

10. Procédé selon l'une des revendications 1 à 9, **caractérisé en ce qu'**au moins une courbe (L_{U}) de valeurs de dérive non compensées du dispositif de mesure de force (1) sont enregistrées sur l'ensemble de la durée de fonctionnement du dispositif de mesure de force (1) et une courbe (L_{CI}) correspondante de valeurs de compensation est asservie et utilisée en conséquence pour corriger des phénomènes de dérive.

11. Dispositif de mesure (1) en particulier balance, comprenant un convertisseur de mesure (10), qui sert à délivrer un signal de mesure (ms) correspondant à une charge agissante, lequel signal peut être amené par un convertisseur analogique/numérique (12) d'une unité de traitement de signal (13) assistée par au moins un processeur (130 ; 16), unité au moyen de laquelle des écarts de dérive peuvent être compensés et qui peut recourir à cet effet au moyen du processeur (130 ; 16) à des paramètres de dérive (P1, P2, ...) déposés dans une unité de mémoire (15 ; 15A ; 15B), paramètres à l'aide desquels une valeur de correction dépendante du temps peut être calculée et l'erreur de dérive, provoquée par le glissement, du signal de mesure (ms) peut ainsi être corrigé, des valeurs nouvelles, optimisées pour les paramètres de dérive (P1, P2, ...) de l'erreur de dérive, provoquée par glissement, du signal de mesure (ms) pouvant être déterminées automatiquement au moyen du processeur (130 ; 16) et de l'unité de traitement de signal (13) à l'aide d'un programme d'optimisation (P_{OPT}), déposé dans l'unité de mémoire (15 ; 15A ; 15B) dans le cadre d'espaces de temps (CI1, CI2) et pouvant être stockées au lieu des valeurs utilisées jusqu'à présent dans l'unité de mémoire (15 ; 15A ; 15B), **caractérisé en ce que** des courbes de signaux (s1, ..., s-n), non corrigées ou seulement partiellement corrigées, du signal de mesure (ms) peuvent être stockées lors de la réalisation de mesures en cas d'opérations de test et/ou en cas d'opérations d'étalonnage dans l'unité de mémoire (15 ; 15A ; 15B) associées avec une information de temps et de date et **en ce que** ces nouvelles valeurs optimisées pour les paramètres de dérive (P1, P2, ...) peuvent être déterminées en utilisant les courbes de signaux (s1,...s-n) stockées du signal de mesure (ms).

12. Dispositif de mesure de force (1) selon la revendication 11, **caractérisé en ce que** le programme d'optimisation (P_{OPT}) est approprié pour mettre en oeuvre le procédé selon l'une des revendications 1 à 11.

13. Dispositif de mesure de force (1) selon la revendication 11 ou 12, **caractérisé en ce que** l'unité de mémoire (15 ; 15A ; 15B) est un support de mémoire lisible et pouvant être décrit, approprié pour le stockage de courbes de signaux (s1, ..., s-n).

14. Dispositif de mesure de force (1) selon la revendication 12 ou 13, **caractérisé en ce que** des moyens, y compris au moins un poids de réglage sont prévus, à l'aide desquels le dispositif de mesure de force (1) peut être étalonné et à l'aide desquels une courbe de signal (s1) peut être enregistrée, courbe à l'aide de laquelle de nouveaux paramètres de dérive (P1, P2, ...) peuvent être enregistrés par le programme d'optimisation (P_{OPT}).

15. Dispositif de mesure de force (1) selon la revendication 12, 13 ou 14, **caractérisé en ce que** des moyens pour l'entrée de l'état du dispositif de mesure de force (1) et/ou pour l'initialisation du procédé selon l'une des revendications 1 à 10 sont prévus et/ou **en ce que** des moyens pour la confirmation côté utilisateur de la prise en charge des valeurs optimisées pour les paramètres de dérive (P1, P2, ...) sont prévus.
